# EUROPÄISCHE PATENTSCHRIFT

(11) **EP 0 959 290 B1**
(45) Veröffentlichungstag und Bekanntmachung des Hinweises auf die Patenterteilung: **02.10.2002**
(21) Anmeldenummer: 99108897.2
(22) Anmeldetag: 05.05.1999
(51) Int. Cl.: F16L 37/084

(54) **Lösbare Schnellkupplung mit automatischer Montageanzeige**
Releasable quick coupling with automatic fitting indicator
Raccord rapide déconnectable avec indicateur automatique de montage

(30) Priorität: 20.05.1998 DE 19822574
(43) Veröffentlichungstag der Anmeldung: 24.11.1999
(73) Patentinhaber: A. Raymond & Cie, F-38028 Grenoble-Cédex (FR)
(72) Erfinder: Raymond, Albert, 38170 Seyssinet (FR); Moretti, Erminio, 38000 Grenoble (FR); Martin-Cocher, Daniel, 38000 Grenoble (FR); Lesser, Hans-Jürgen, Dr. Ing., 79618 Rheinfelden (DE)
(74) Vertreter: Kirchgaesser, Johannes, Dipl.-Ing.

(56) Entgegenhaltungen:
- EP-A- 0 605 801
- EP-A- 0 846 907
- WO-A-97/34102
- US-A- 4 913 467

## Beschreibung

Die Erfindung betrifft eine lösbare Schnellkupplung mit automatischer Montageanzeige zum Verbinden von Flüssigkeitsleitungen gemäß dem Oberbegriff des Patentanspruchs.

Derartige Schnellkupplungen werden u.a. im Kraftfahrzeugbau verwendet, um Kraftstoffleitungen untereinander oder mit an Kraftstoffbehälter oder -verteiler angeformten oder sonstwie befestigten Einsteckteilen zu verbinden. Hierbei kommt es nicht nur auf eine einfache und montagefreundliche Handhabung sowie eine absolut dichte Verbindung nach dem Einrasten des Einsteckteils im Kupplungsgehäuse an, sondern die Kupplung muß sich im Bedarfsfall auch wieder leicht lösen lassen.

Die Erfindung geht aus von der **EP 0 547 489 A1** bekannten Schnellkupplung mit Montageanzeige. Das dort gezeigte Anzeigeteil besteht aus einem vor der Einstecköffnung des Aufnahmegehäuses positionierbaren und sich an dessen Stirnwand abstützenden Ring sowie mindestens zwei in den Aufnahmeraum hineinragenden, einander gegenüberliegenden Haltestegen. An deren freien Enden ist ein umlaufender Anschlagring angeformt, der mit der Halterippe beim Einführen des Einsteckteils derart zusammenwirkt, daß der Anschlagring von der Halterippe nach innen gedrückt wird, wobei der Stützring von den Haltestegen an vorgesehenen Sollbruchstellen abreißt. Die Tatsache, daß der Stützring nunmehr lose vor dem Gehäuseeingang herumhängt, dient als Beweis dafür, daß die Kupplungsteile sicher miteinander verbunden sind. Bei dieser Montageanzeige wird es als Nachteil empfunden, daß das Anzeigeteil mit seinen Haltestegen und Anschlagring mit Spiel locker im Aufnahmeraum eingebettet ist und daß ferner zum Abreißen der Sollbruchstellen ein beträchtlicher Kraftaufwand erforderlich ist.

Aufgabe der Erfindung ist es, die Montageanzeige so zu gestalten, daß das Anzeigeteil nach dem Einführen in den Aufnahmeraum sicher und wackelfrei gehalten wird und das Freidrücken des Anzeigeteils leicht und ohne besonderen Kraftaufwand erreicht wird, ohne daß die Sicherheit des Verschlusses nach dem Einführen des Einsteckteils beeinträchtigt wird. Diese Aufgabe wird durch die im Patentanspruch 1 angegebene Erfindung gelöst.

Ein weiteres Anliegen der Erfindung ist es, das Anzeigeteil so auszubilden, daß es ohne besondere Vorkehrungen in die aus EP 0 605 801 C1 bekannte Schnellkupplung eingebaut werden kann. Bei dieser Kupplung ist das quer zur Gehäuseachse gelagerte Halteelement mit Haltekanten versehen ist, die an ihren Enden über V-förmig zusammengeführte Federstege mit Druckplatten verbunden sind, welche durch entsprechende Öffnungen in der Gehäusewand bis nach außen ragen und zum Lösen der Kupplung von außen eindrückbar sind. Diese Aufgabe wird durch die im Patentanspruch 2 angegebene Ausführungsform der Erfindung gelöst.

In den Unteransprüchen sind noch weitere für die Weiterbildung der Erfindung förderliche Merkmale enthalten, deren Vorteile aus der nachfolgenden Zeichnungsbeschreibung hervorgehen. Ein Ausführungsbeispiel der Erfindung ist in der Zeichnung dargestellt und soll hier näher erläutert werden. Es zeigt
- **Fig. 1**: das Aufnahmegehäuse einer Schnellkupplung mit Einsteckteil vor dem Eindrücken,
- **Fig. 2**: das Kupplungsgehäuse im Längsschnitt mit Montageanzeige vor und nach dem Einsetzen des Anzeigeteils,
- **Fig. 3**: der Eingangsbereich des Gehäuses mit Anzeigeteil in Vorderansicht,
- **Fig. 4**: einen Schnitt durch den vorderen Bereich des Aufnahmeraums mit Halteelement gemäß Linie IV - IV in Fig. 2,
- **Fig. 5**: das Anzeigeteil in Seitenansicht mit Teilschnitt gemäß Linie V - V in Figur 6,
- **Fig. 6**: das Anzeigeteil in Vorderansicht,
- **Fig. 7**: einen Schnitt durch das Anzeigeteil gemäß Linie VII - VII in Fig. 6,
- **Fig. 8**: das Steckgehäuse mit verriegeltem Anzeigeteil beim Einführen des Einsteckteils,
- **Fig. 9**: das Steckgehäuse mit gekuppeltem Einsteckteil und entriegeltem Anzeigeteil,
- **Fig. 10**: das Steckgehäuse mit gekuppeltem Einsteckteil und herausgetretenem Anzeigeteil zum Beweis der korrekten Montage und
- **Fig. 11**: die Gehäuseöffnung in Vorderansicht mit seitlich weggezogenem Anzeigeteil

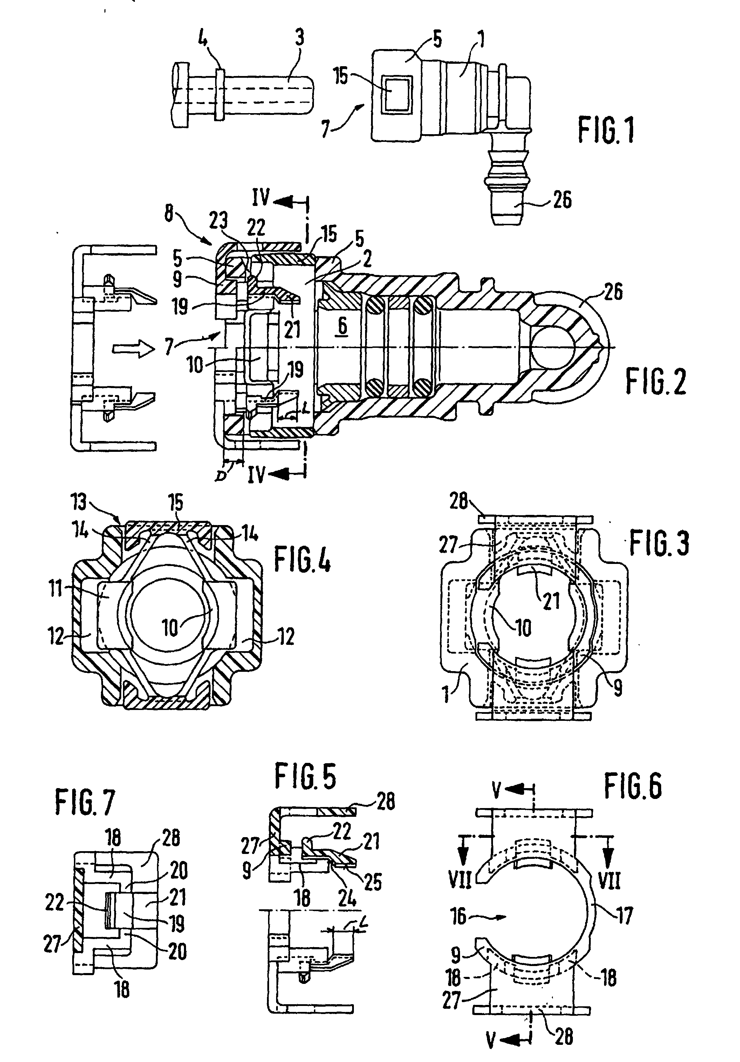

Die in den Figuren dargestellte Schnellkupplung besteht, wie aus **Fig. 1** ersichtlich. aus einem Aufnahmegehäuse **1** aus Kunststoff mit einem rohrförmigen Stutzen **26** zum Anschluß einer nicht dargestellten Flüssigkeitsleitung und einem zylindrischen Aufnahmeraum **6** zum Einführen eines rohrförmigen Einsteckteils **3** mit einer umlaufenden Halterippe **4**.

Das Einsteckteil **3** kann hierbei sowohl das Ende eines stabilen Metallrohres sein, welches beispielsweise für Kraftstoffleitungen verwendet wird. Es kann aber auch - genau wie das Aufnahmegehäuse - aus starrem Kunststoff oder anderem Spritzgießmaterial bestehen, welches in gleicher Weise wie der Stutzen **7** des Aufnahmegehäuses mit einer Flüssigkeitsleitung verbindbar ist oder aber an einem Kraftstoffbehälter bzw. -verteiler angeformt oder in sonstiger Weise befestigt ist.

Im vorderen Bereich des Aufnahmeraums **6** befindet sich ein Halteelement **2** aus hartelastischem Kunststoff, welches durch eine Öffnung in der zylindrischen Gehäusewand **5** in den Aufnahmeraum **6** einführbar ist. Dieses Halteelement **2** weist zwei kreisbogenförmig nach innen gerichtete Haltekanten **10** auf, welche die Halterippe **4** nach dem Eindrücken des Einsteckteils **3** in bekannter Weise hintergreifen und so das Einsteckteil **3** im Gehäuse **1** verkuppeln.

Die Haltekanten **10** sind zu diesem Zweck an zwei nach außen abstehende Stützkörper **11** angeformt, welche ihrerseits im eingebauten Zustand des Halteelements **2** in entsprechende Aussparungen **12** der Gehäusewand **5** eintauchen und dort entgegen der Einsteckrichtung gehalten werden. Die Stützkörper **11** sind an ihren Enden über V-förmig zusammengeführte Federstege **14** untereinander verbunden, wobei die Verbindungsstellen jeweils mit einer etwa rechteckigen Druckplatte **15** abgedeckt sind, welche durch die Gehäuseöffnung **13** nach außen ragen.

Zum Lösen der Kupplung werden die Druckplatten **15** von außen zusammengedrückt. Dadurch werden die Haltekanten **10** über die Federstege **14** und die Stützkörper **11** auseinanderbewegt, so daß die Halterippe **4** freiliegt und das Einsteckteil **3** aus dem Steckgehäuse **1** herausgezogen werden kann.

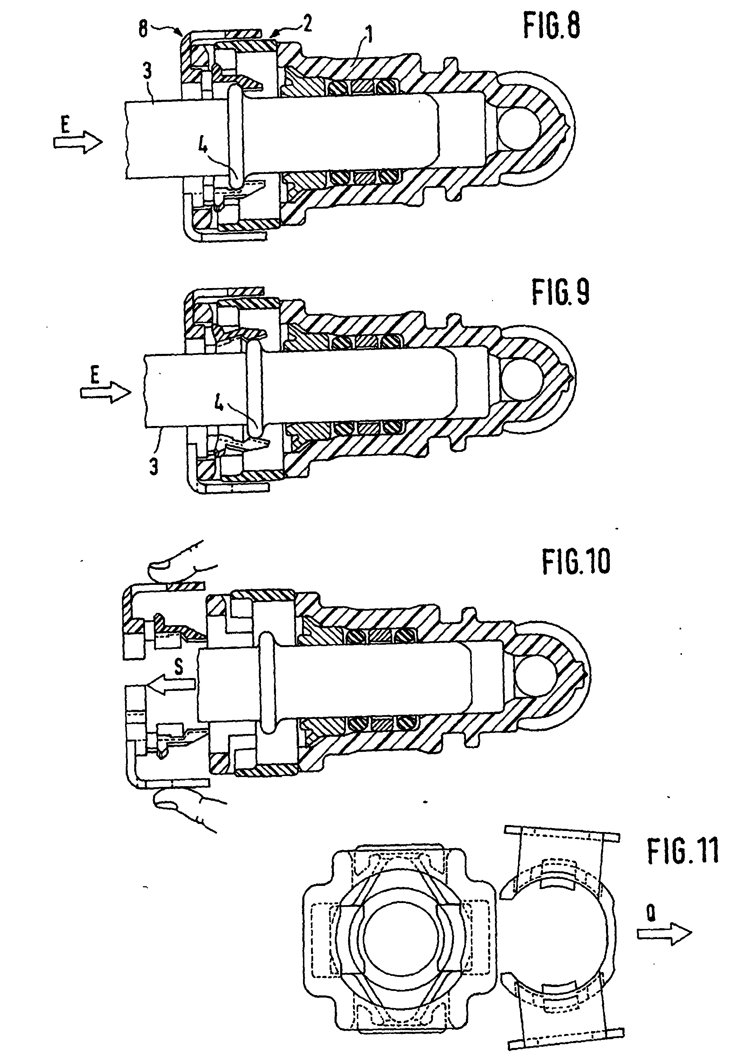

Das in den Figuren **5** - **7** separat dargestellte Anzeigeteil 8 ist ebenfalls aus hartelastischem Kunststoff hergestellt und besteht im wesentlichen aus einem Stützring **9,** welcher an einer Seite einen Spalt **16** und an der gegenüberliegenden Seite eine Querschnittsschwächung **17** aufweist, durch welche der Ring **9** nach dem Austreten des Anzeigeteils **8** aus dem Aufnahmeraum **6** leichter auseinanderbiegbar ist, um das Anzeigeteil **8** seitlich wegziehen zu können (**Figur 11**).

Am Stützring **9** sind gegenüberliegend je zwei achsparallele Haltestege **18** angeformt, welche in den Aufnahmeraum **6** innerhalb des freien Raumes zwischen den Federstegen **14** des Halteelements **2** einführbar sind. Zwischen zwei Haltestegen **18** befinden sich gegenüberliegend zwei Hebel **19**, welche über kurze Verbindungsstege **20** mit den Enden der Haltestege **18** einstückig verbunden und dadurch aufgrund des Torsionsverhaltens der Verbindungsstege parallel zur Gehäuseachse schwenkbar gelagert sind.

Die Hebel **19** weisen an den in Einführrichtung vorderen Enden nach innen abstehende Anschlagnasen **21** und an den zum Stützring **9** zeigenden Enden nach außen abgewinkelte Stütznasen **22** auf, welche sich im eingebauten Zustand des Anzeigeteils **8** an der inneren Stirnwand **23** des Aufnahmeraums **6** in axialer Richtung abstützen ( **Figur 2**).

Die Anschlagnasen **21** besitzen Anschlagflächen **24,** welche in Einsteckrichtung der Halterippe **4** derart abgeschrägt sind, daß die Anschlagnasen **21** im Zuge des Einführens des Einsteckteils **3** in Richtung der Pfeile **E** ( **Figuren 8 - 9** ) von dessen Halterippe **4** nach außen gedrückt werden.

Dieser Vorgang des Auseinanderdrückens ist abgeschlossen, sobald die Halterippe **4** die sich ebenfalls nach außen bewegende Haltekanten **10** des Halteelements **2** passiert hat und die Haltekanten **10** hinter der Halterippe **4** eingerastet sind ( **Figur 9** ). In diesem Augenblick trifft die Halterippe **4** auf die innenliegenden Gleitflächen **25** der Anschlagnasen **21**, welche im unbelasteten Zustand achsparallel verlaufen und eine Länge L besitzen, die der Dicke D der Stirnwand **23** an der Gehäuseöffnung entspricht.

Zum einwandfreien Funktionieren der Montageanzeige ist es wichtig, daß die Anschlagnasen **21** mit ihren Gleitflächen **25** soweit nach innen ragen und die Stütznasen **22** nur soweit nach außen abstehen, daß beim Auseinanderdrücken der Anschlagnasen **21** die Stütznasen **22** mit einem zum Passieren der Einstecköffnung **7** ausreichenden Abstand nach innen gedrückt werden.

Durch das ruckartige Lösen der Stütznase **22** von der inneren Stirnwand **23** und das Auftreffen der Halterippe **4** auf die nunmehr schräg nach außen gerichtete Gleitfläche **25** ergibt sich ein Springeffekt. Das Anzeigeteil **8** wird aus dem Aufnahmeraum **6** in Richtung des Pfeiles S herausgeschleudert ( **Figur 10**) und kann dann, wie in Figur **11** gezeigt, in Richtung des Pfeiles Q seitlich weggezogen werden.

Am Stützring **9** sind über die Gesamtbreite der Haltestege **18** noch zwei radial nach außen weisende Stützstege **27** angeformt, an deren Enden parallel zu den Druckplatten **15** verlaufende Abdecklappen **28** angewinkelt sind. Diese dienen zum leichteren Erfassen des Anzeigeteils **8** beim Einführen der Haltestege **18** in die Einstecköffnung **7** und auch beim seitlichen Wegziehen nach dem Austreten aus der Einstecköffnung gemäß **Figur 11**. Außerdem erleichtern diese das Auffinden der richtigen Lage beim Einstecken, indem die Abdecklappen **28** lediglich über die Druckplatten zu schieben sind. Die Stützstege **27** befinden sich hierbei am in Einsteckrichtung des Anzeigeteils **8** vorderen Rand des Stützrings **9**, so daß der hintere, innere Rand zentrierend in die Einstecköffnung **7** hineinragt. Dadurch wird das Anzeigeteil **8** in Verbindung mit den an der Stirnwand **23** einrastenden Stütznasen **22** und den auf den Druckplatten **15** anliegenden Abdecklappen 28 sehr stabil in der Einstecköffnung **7** gehalten, so daß die vormontierten Anzeigeteile **8** während des Transports bis zum Einsatz nicht verlorengehen können.

## Patentansprüche

1. Lösbare Schnellkupplung mit automatischer Montageanzeige zum Verbinden von Flüssigkeitsleitungen, bestehend aus einem rohrförmigen Einsteckteil ( 3 ) mit einer umlaufenden Halterippe ( 4 ), einem Aufnahmegehäuse ( 1 ) mit einem zylindrischen Aufnahmeraum ( 6 ) zum Einführen des Einsteckteils ( 3 ) und aus einem separaten Halteelement (2) mit radial in den Aufnahmeraum ( 6 ) gerichteten, elastisch aufrederbaren Haltekanten (10) zum Hintergreifen der Halterippe ( 4 ) nach dem Einführen des Einsteckteils ( 3 ) sowie aus einem Anzeigeteil ( 8 ), bestehend aus einem vor der Einstecköffnung ( 7 ) des Aufnahmegehäuses ( 1 ) positionierbaren und sich an dessen Stirnseite abstützenden Ring ( 9 ) mit mindestens zwei in den Aufnahmeraum ( 6 ) hineinragenden, einander gegenüberliegenden Haltestegen ( 18 ) und an deren freien Enden angeformten, mit der Halterippe ( 4 ) beim Einführen des Einsteckteils ( 3 ) zusammenwirkenden Anschlaggliedern, **dadurch gekennzeichnet, daß** die Anschlagglieder aus parallel zur Gehäuseachse schwenkbar gelagerten Hebeln ( 19 ) bestehen, die an ihren in Einführrichtung vorderen Enden nach innen abstehende Anschlagnasen ( 21 ) aufweisen und an ihren zum Stützring ( 9 ) zeigenden Enden nach außen abgewinkelte Stütznasen ( 22) besitzen, welche sich im eingebauten Zustand des Anzeigeteils ( 8 ) an der inneren Stirnwand ( 23 ) des Aufnahmeraumes ( 6 ) in axialer Richtung und entgegen der Einführichtung abstützen, wobei die Anschlagnasen ( 21 ) von der Halterippe ( 4 ) des Einsteckteils ( 3 ) beim Erreichen der Verschlußposition soweit nach außen gedrückt werden, daß die über die Hebel ( 19 ) nach innen schwenkenden Stütznasen ( 22 ) sich von der inneren Stirnwand ( 23 ) des Aufnahmeraumes ( 6 ) lösen und durch die Einstecköffnung ( 7 ) nach außen treten können.

2. Lösbare Schnellkupplung nach Anspruch 1, wobei die gegenüberliegenden Haltekanten ( 10 ) des Halteelements ( 2 ) an Stützkörpern ( 11 ) angeformt sind, die an ihren Enden über V-förmig zusammengeführte Federstege ( 14 ) mit Druckplatten ( 15 ) verbunden sind, welche durch entsprechende Öffnungen ( 13 ) in der Gehäusewand ( 5 ) nach außen ragen und zum Lösen der Kupplung von außen eindrückbar sind, **dadurch gekennzeichnet, daß** die Haltestege ( 18 ) mit ihren Hebeln ( 19 ) so bemessen sind, daß diese in den Aufnahmeraum ( 6 ) innerhalb des freien Raums zwischen den Federstegen (14) einführbar sind.

3. Lösbare Schnellkupplung nach Anspruch 1 oder 2, **dadurch gekennzeichnet, daß** die Anschlagflächen ( 24 ) der Anschlagnasen ( 21 ) in Einsteckrichtung der Halterippe ( 4) abgeschrägt sind, während die innen liegenden Gleitflächen ( 25) der Anschlagnasen ( 21 ) achsparallel verlaufen und eine Länge L besitzen, die der Dicke D der Stirnwand ( 23 ) der Einstecköffnung (7) entspricht.

4. Lösbare Schnellkupplung nach Anspruch 3, **dadurch gekennzeichnet, daß** die Anschlagnasen ( 21 ) mit ihren Gleitflächen ( 25 ) soweit nach innen ragen und die Stütznasen ( 22 ) soweit nach außen abgewinkelt sind, daß beim Auseinanderdrücken der Anschlagnasen ( 21 ) die Stütznasen ( 22 ) mit einem zum Passieren der Einstecköffnung ( 7 ) ausreichenden Abstand nach innen gedrückt werden.

5. Lösbare Schnellkupplung nach einem der vorhergehenden Ansprüche, **dadurch gekennzeichnet, daß** der Ring ( 9 ) an einer Seite einen Spalt ( 16 ) und an der gegenüberliegenden Seite eine Querschnittsschwächung ( 17 ) aufweist, durch welche der Ring ( 9 ) nach dem Austreten des Anzeigeteils ( 8 ) auseinanderbiegbar ist.

## Claims

1. A releasable quick-action coupling with automatic assembly indication for connecting fluid lines, comprising a tubular plug-in member (3) which has a holding rib (4) extending therearound, a receiving housing (1) with a cylindrical receiving space (6) for the insertion of the plug-in member (3) and a separate holding element (2) with holding edges (10) which are directed radially into the receiving space (6) and which can be elastically sprung open for engaging behind the holding rib (4) after insertion of the plug-in member (3), and an indicator member (8) comprising a ring (9) which can be positioned in front of the insertion opening (7) of the receiving housing (1) and which is supported at the end thereof and which has at least two mutually oppositely disposed holding legs (18) which project into the receiving space (6) and abutment members which are formed at the free ends thereof and which cooperate with the holding rib (4) upon insertion of the plug-in member (3), **characterised in that** the abutment members comprise levers (19) which are mounted pivotably in parallel relationship with respect to the axis of the housing and which at their ends which are the front ends in the insertion direction have inwardly projecting abutment noses (21) and at their ends facing towards the support ring (9) have outwardly angled support noses (22) which in the installed condition of the indicator member (8) are supported in the axial direction and in opposite relationship to the insertion direction against the inner end wall (23) of the receiving space (6), wherein the abutment noses (21) are pressed outwardly by the holding rib (4) of the plug-in member (3) when the closure position is reached, to such an extent that the support noses (22) which pivot inwardly by way of the levers (19) are released from the inner end wall (23) of the receiving space (6) and can pass outwardly through the insertion opening (7).

2. A releasable quick-action coupling according to claim 1 wherein the oppositely disposed holding edges (10) of the holding element (2) are formed on support bodies (11) which at their ends are connected by way of spring legs (14) which are brought together in a V-shape, to pressure plates (15) which project outwardly through corresponding openings (13) in the housing wall (5) and which can be pressed in to release the coupling from the exterior, **characterised in that** the holding legs (18) with their levers (19) are so dimensioned that they can be introduced into the receiving space (6) within the free space between the spring legs (14).

3. A releasable quick-action coupling according to claim 1 or claim 2 **characterised in that** the abutment surfaces (24) of the abutment noses (21) are bevelled in the insertion direction of the holding rib (4) while the inwardly disposed sliding surfaces (25) of the abutment noses (21) extend parallel to the axis and are of a length L which corresponds to the thickness D of the end wall (23) of the insertion opening (7).

4. A releasable quick-action coupling according to claim 3 **characterised in that** the abutment noses (21) project inwardly with their sliding surfaces (25) to such an extent and the support noses (22) are angled outwardly to such an extent that when the abutment noses (21) are urged away from each other the support noses (22) are pressed inwardly with a spacing sufficient for passing the insertion opening (7).

5. A releasable quick-action coupling according to one of the preceding claims **characterised in that** the ring (9) has a gap (16) at one side and at the opposite side it has a weakening (17) in its cross-section, by means of which the ring (9) can be bent apart after the indicator member (8) issues.

## Revendications

1. Raccord rapide déconnectable muni d'un indicateur automatique de montage destiné à raccorder des conduites véhiculant des substances liquides, se composant d'un élément tubulaire embrochable mâle (3), comportant une nervure de retenue périphérique (4), d'un élément d'emmanchement femelle de forme cylindrique (1) définissant un logement de réception (6) dans lequel l'élément embrochable mâle (3) est destiné à être introduit et d'un organe de retenue séparé (2) muni d'arêtes de retenue (10) capables de céder par déformation élastique, orientées en direction du logement de réception (6), destinées à venir cramponner par derrière la nervure de retenue périphérique (4) après l'introduction de l'élément embrochable mâle (3), ainsi que d'un dispositif indicateur (8) se composant d'une bague (9) destinée à être positionnée devant l'ouverture d'introduction (7) de l'élément d'emmanchement femelle (1) et prenant appui sur la face antérieure de celui-ci, comportant au moins deux barrettes de retenue (18) à disposition diamétralement opposée pénétrant à l'intérieur du logement de réception (6), ainsi que des organes de butée réalisés solidaires de leurs extrémités libres par formage opérant en combinaison avec la nervure de retenue périphérique (4) lors de l'emmanchement de l'élément embrochable mâle (3), **caractérisé en ce que** les organes de butée se composent de leviers (19) disposés avec la possibilité de pivoter parallèlement à l'axe de l'élément d'emmanchement femelle, qui comportent au niveau de leurs extrémités antérieures dans le sens de l'emmanchement des ergots de butée (21) faisant saillie vers l'intérieur et au niveau de leurs extrémités orientées en direction de la bague d'appui (9) des ergots d'appui (22) repliés vers l'extérieur selon une disposition angulaire qui, lorsque le dispositif indicateur (8) est monté en position, prennent appui dans le sens axial et à l'opposé du sens de l'emmanchement contre la paroi intérieure avant (23) du logement de réception (6), les ergots de butée (21) étant en l'occurrence repoussés vers l'extérieur par la nervure de retenue (4) de l'élément embrochable mâle (3) lorsque la position d'accouplement du raccord est atteinte, dans une proportion telle que les ergots d'appui (22) pivotant vers l'intérieur par l'intermédiaire des leviers (19) se dégagent de la paroi intérieure avant (23) du logement de réception (6) et peuvent sortir à l'extérieur par l'ouverture d'introduction (7).

2. Raccord rapide déconnectable selon la revendication 1, les arêtes de retenue (10) à disposition respectivement opposée de l'organe de retenue (2) étant en l'occurrence réalisées solidaires par moulage d'éléments d'appui (11) qui, au niveau de leurs extrémités, sont reliées à des plaques de compression (15) par des barrettes entretoises élastiques (14) rapprochées l'une de l'autre suivant une disposition en V, qui font saillie vers l'extérieur par des ouvertures (13) ménagées en correspondance dans la paroi (5) de l'élément femelle et qui peuvent être enfoncées en exerçant sur elles, depuis l'extérieur, un effort de compression bilatéral pour désolidariser le raccord, **caractérisé en ce que** les barrettes de retenue (18) avec leurs leviers (19) sont dimensionnées dans une proportion telle qu'elles peuvent être introduites dans le logement de réception (6) à l'intérieur de l'espace libre séparant les barrettes entretoises élastiques (14).

3. Raccord rapide déconnectable selon la revendication 1 ou 2 **caractérisé en ce que** les faces de butée (24) des ergots de butée (21) sont biseautées dans le sens de l'emmanchement de la nervure de retenue (4) tandis que les surfaces de glissement à disposition intérieure (25) des ergots de butée (21) s'étendent suivant une orientation coaxiale et ont une longueur L qui correspond à l'épaisseur D de la paroi antérieure (23) de l'ouverture d'emmanchement (7).

4. Raccord rapide déconnectable selon la revendication 3, **caractérisé en ce que** les ergots de butée (21) font saillie vers l'intérieur, au niveau de leurs surfaces de glissement, dans une proportion telle et **en ce que** les ergots d'appui (22) sont repliés suivant une disposition angulaire vers l'extérieur dans une proportion telle que lorsqu'on exerce sur les ergots de butée (21) une pression visant à les faire s'écarter l'un de l'autre, les ergots d'appui (22) sont repoussés vers l'intérieur dans une proportion suffisante pour leur permettre de passer dans l'ouverture d'introduction (7).

5. Raccord rapide déconnectable selon l'une des revendications qui précèdent, **caractérisé en ce que** la bague (9) comporte sur un côté une fente (16) et sur son côté opposé un amincissement de section (17), agencements qui permettent à la bague (9) de s'écarter par flexion après la sortie du dispositif indicateur (8).
